# EUROPEAN PATENT APPLICATION

(11) **EP 4 044 076 A1**
(43) Date of publication of application: **17.08.2022**
(21) Application number: 20874954.9
(22) Date of filing: 24.09.2020
(51) Int. Cl.: G06Q 10/00, G06Q 30/06

(54) **COMMUNICATION SYSTEM AND ROBOT**

(30) Priority: 08.10.2019 JP 2019185243
(71) Applicant: Ana Holdings Inc., Minato-ku Tokyo 105-7140 (JP)
(72) Inventor: FUKABORI, Akira, Tokyo 103-0022 (JP); KAJITANI, Kevin, Tokyo 103-0022 (JP)
(74) Representative: Würmser, Julian
(86) International application number: PCT/JP2020/036016
(87) International publication number: WO 2021/070621

(57) **Abstract**

A communication system and a robot that make it easy to utilize the robot is provided. A communication system 100 includes robots 20, 21, and 22 that are not fixed; and a plurality of computers 10 and 11 configured to communicate with the robot. The robot includes a camera and a mode switching unit that switches between a first mode of operation based on a command from an unspecified computer among the plurality of computers and a second mode of operation based on a command from a specific computer for which a user has been authenticated among the plurality of computers. The computer includes an input unit that receives an input of a command for the robot and a display unit that displays an image captured by the camera.

## Description

### Cross-reference to related applications

This application is based on Japanese Patent Application No. 2019-185243 filed on October 8, 2019, the content of which is incorporated herein by reference.

### Technical Field

The present invention relates to a communication system and a robot.

### Background Art

In recent years, video conference systems through the Internet have become widespread, and a telepresence robot is used therein that allows a user at a remote place to operate the direction and position of a camera, as well as to talk with a person while looking at his/her face.

For example, Patent Document 1 below describes a moving object with a camera including: the camera that provides a captured image to a remote operator and a mask processing unit that executes mask processing of hiding at least a part of the captured image from the remote operator and switches the mask processing according to the situation.

### Citation List

### Patent Document

Patent Document 1: Patent Publication JP-A-2019-062308

### Summary

### Technical Problem

The conventional telepresence robot is started to be used after authentication processing such as login, and does not allow an unauthorized user to use. Such a robot, which is the property of the owner, has a limited use which may result in long non-operational hours, and thus may be difficult to utilize.

Therefore, the present invention provides a communication system and a robot that make it easy to utilize the robot.

### Solution to Problem

A communication system according to one aspect of the present invention includes a robot that is not fixed; and a plurality of computers configured to communicate with the robot, wherein the robot includes a camera and a mode switching unit that switches between a first mode of operation based on a command from an unspecified computer among the plurality of computers and a second mode of operation based on a command from a specific computer for which a user has been authenticated among the plurality of computers, and the computer includes an input unit that receives an input of a command for the robot and a display unit that displays an image captured by the camera.

According to this aspect, the robot switchable between the first mode and the second mode makes it possible to be used by the owner in the second mode while being openly available in the first mode during a free time not used for the owner, so that the robot can be operated by an unspecified user, which may provide a benefit. In addition, the robot can also be openly available in the first mode so that the owner can communicate with an unspecified user. In this way, the robot can be utilized more effectively.

In the above aspect, the robot operating in the first mode may receive advance reservations from the plurality of computers and operate during the reserved period based on a command from the computer that has made the reservation.

According to this aspect, the robot can be lent to an unspecified user in pay by the hour so as to be utilized as an asset.

In the above aspect, a plurality of robots may be provided, the display unit may display a list of robots operating in the first mode among the plurality of robots, and the input unit may receive a selection of one of the robots operating in the first mode and receive an input of a command for the selected robot.

According to this aspect, the robots available to an unspecified user can be grasped at a glance, so that the usage of the robots can be promoted and the robots can be more utilized.

In the above aspect, a plurality of robots may be provided, and the display unit may display a list of robots operating in the first mode among the plurality of robots and robots operating in the second mode for which a user has been authenticated among the plurality of robots, and the input unit may receive a selection of either one of the robots operating in the first mode or one of the robots operating in the second mode and receive an input of a command for the selected robot.

According to this aspect, the robots available to an unspecified user and the pre-registered robots can be grasped at a glance, so that the usage of the robots can be promoted and the robots can be more utilized.

**A** robot according to another aspect of the present invention is of mobile type or wearable type robot including a camera and a remotely operable drive unit, the robot including a mode switching unit that switches between a first mode and a second mode; a reception unit that receives a command from an unspecified computer among a plurality of computers when the first mode is set, and receives a command from a specific computer for which a user has been authenticated among the plurality of computers when the second mode is set; a control unit that controls the drive unit in response to the received command; and a transmission unit that transmits an image acquired by the camera to the computer from which the command is input.

According to this aspect, the robot switchable between the first mode and the second mode makes it possible to be used by the owner in the second mode while being openly available in the first mode during a free time not used for the owner, so that the robot can be operated by an unspecified user, which may provide a benefit. In addition, the robot can also be openly available in the first mode so that the owner can communicate with an unspecified user. In this way, the robot can be utilized more effectively.

### Advantageous Effects of Invention

According to the present invention, it is possible to provide a communication system and a robot that make it easy to utilize the robot.

### Brief Description of Drawings

Fig. 1 is a diagram illustrating a network configuration of a communication system according to an embodiment of the present invention.
Fig. 2 is a diagram illustrating a physical configuration of a computer according to the embodiment.
Fig. 3 is a diagram illustrating a physical configuration of a robot according to the embodiment.
Fig. 4 illustrates an example of a first screen displayed on the computer according to the embodiment.
Fig. 5 illustrates an example of a second screen displayed on the computer according to the embodiment.
Fig. 6 is a flowchart of processing executed by the computer according to the embodiment.

### Description of Embodiments

Embodiments of the present invention will be described with reference to the accompanying drawings. It is to be noted that, in each figure, identical reference numerals indicate those having identical or similar configurations.

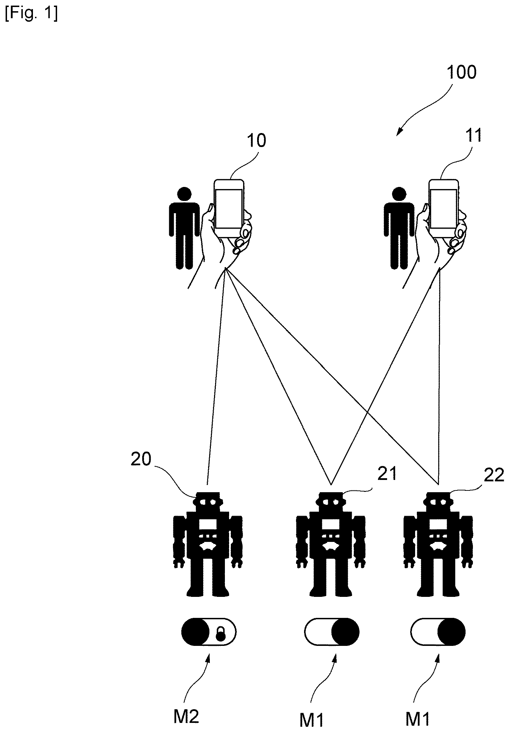

Fig. 1 is a diagram illustrating a network configuration of a communication system 100 according to an embodiment of the present invention. The communication system 100 includes robots 20, 21, and 22 that are not fixed and a plurality of computers 10 and 11 that are able to communicate with the robots 20, 21, and 22. Here, the fact that the computers 10 and 11 are able to communicate with the robots 20, 21, and 22 includes that wireless communication or wired communication is possible, and also includes the case where communication via the Internet or an LAN (Local Area Network) is possible and the case where short-range radio communication is possible. It is to be noted that, in the present embodiment, three robots 20, 21, and 22 and two computers 10 and 11 are illustrated, but any number of them may be included.

The robots 20, 21, and 22 each include a camera and a mode switching unit that switches between a first mode M1 of operation based on a command from an unspecified computer among the plurality of computers 10 and 11 and a second mode M2 of operation based on a command from a computer used by a specific user for which the user has been authenticated among the plurality of computers 10 and 11. It is to be noted that the "unspecified computer" may be a computer that has accessed a dedicated site for operating the robots 20, 21, and 22, or a computer on which an application for operating the robots 20, 21, and 22 is installed, or a computer in which a user is registered in advance to use the robots 20, 21, and 22. The robots 20, 21, and 22 may each be composed of, for example, a telepresence robot or an avatar robot, and include a moving part such as a wheel. In the example illustrated in Fig. 1, the robot 20 operates in the second mode M2, and receives only commands from the computer 10 used by an authenticated user. On the other hand, the robots 21 and 22 operate in the first mode M1 and receive commands from any of the computers 10 and 11.

The robots 21 and 22 operating in the first mode M1 operate based on commands from the computers 10 and 11 without user authentication. However, when commands are received from a plurality of computers at the same time, the commands are complicated. Therefore, the robots 21 and 22 operating in the first mode M1 may each receive an advance reservation and operate based on a command from a computer used by the user who has made the reservation. On the other hand, the robot 20 operating in the second mode M2 operates based on a command from the computer 10 for which the user authentication is successful. Here, the user authentication may be performed by a known method (e.g., a user name and password, biometric authentication, etc.), and the information for the user authentication may be registered in advance. The robot 20 operating in the second mode M2 may also operate based on a command from a computer used by a user who has made an advance reservation among the users for which the user authentication is successful. The robots 21 and 22 operating in the first mode M1 are robots that do not require user authentication, that is, operate in a public mode in which no special access right is required, and the robot 20 operating in the second mode M2 is a robot that requires user authentication, that is, operates in a private mode in which a special access right is required (the user authentication is a technique for verifying the access right). It is to be noted that the special access right may be hierarchical. For example, the special access right may have a first access right and a second access right which is more special than the first access right. In this case, commands from a computer used by a second user (e.g., the owner or administrator of the robot 20, 21, or 22) (for which a second user authentication is successful) having the second access right may be given priority over commands from a computer used by a first user (for which a first user authentication is successful) having the first access right, or the computer used by the second user may be given a right for changing various settings of the robots 20, 21, and 22 and/or the access right.

The robots 20, 21, and 22 being not fixed includes the case where the robots 20, 21, and 22 are of mobile type which has a moving part such as a wheel, and the case where they are of wearable type which can be worn by a person and has a driving part such as a manipulator. The mobile type robot is described in, for example, Patent Document 1. The moving part of the mobile type robot includes a type of traveling by one wheel, two wheels, or multiple wheels, a type of traveling by a caterpillar, a type of traveling on a rail, a type of jumping to move, a type of bipedal walking, quadrupedal walking, or multi-legged walking, a type of navigating on or under water with a screw, and a type of flying with a propeller or the like. The wearable type robot is disclosed in, for example, MHD Yamen Saraiji, Tomoya Sasaki, Reo Matsumura, Kouta Minamizawa and Masahiko Inami, "Fusion: full body surrogacy for collaborative communication," Proceeding SIGGRAPH '18 ACM SIGGRAPH 2018 Emerging Technologies Article No. 7. Further, the robots 20, 21, and 22 include vehicles and heavy machinery capable of automatic or semiautomatic traveling, and drones and airplanes. Further, the robots 20, 21, and 22 include robots each installed in a sports stadium or the like and equipped with a camera that can move on a rail. Further, the robots 20, 21, and 22 include satellite-type robots which are to be launched into outer space and whose attitude and camera shooting direction can be controlled.

The mode switching unit of the robots 20, 21, and 22 may be implemented as a physical switch or may be implemented by software. In the case where the mode switching unit is implemented as a physical switch, by switching a switch provided in each of the robots 20, 21, and 22, it is possible to switch between the first mode M1 and the second mode M2. Further, in the case where the mode switching unit is implemented by software, user authentication processing is performed, and a user for which the user authentication is successful operates an input unit provided in each of the robots 20, 21, and 22 to switch between the first mode M1 and the second mode M2, or a command from a computer for which the user authentication is successful is issued to switch between the first mode M1 and the second mode M2. In the case where the user's access right (authentication processing) is hierarchical, for example, in the case where the special access right has a first access right (first user authentication processing) and a second access right (second user authentication processing) which is more special than the first access right, the switching between the first mode M1 and the second mode M2 may be performed only in response to a command from a computer of a user having the second access right (a computer for which the second user authentication is successful). In the case where the mode switching unit is implemented by software, the administrator of the robots 20, 21, and 22 can switch between the first mode M1 and the second mode M2 while being at a remote location.

The computers 10 and 11 each include an input unit that receives inputs of commands for the robots 20, 21, and 22, and a display unit that displays images captured by the cameras of the robots 20, 21, and 22. The computers 10 and 11 are each composed of, for example, a smartphone, but may be composed of a personal computer or the like. The users of the computers 10 and 11 can communicate with other users in remote locations where the robots 20, 21, and 22 are arranged via the robots 20, 21, and 22.

In the communication system 100 according to the present embodiment, the robots 20, 21, and 22 switchable between the first mode M1 and the second mode M2 makes it possible to be used by a specific user in the second mode M2 while being openly available in the first mode M1 during a free time not used for the specific user, so that the robots 20, 21, and 22 can be shared by an unspecified user. At this time, the specific user may obtain its benefit. In addition, the robots 20, 21, and 22 can also be openly available in the first mode M1 and the owner can communicate with an unspecified user. In this way, the robots 20, 21, and 22, can be utilized more effectively.

Hereinafter, the computers 10 and 11 are collectively referred to as the computer(s) 10. Further, the robots 20, 21, and 22 are collectively referred to as the robot(s) 20.

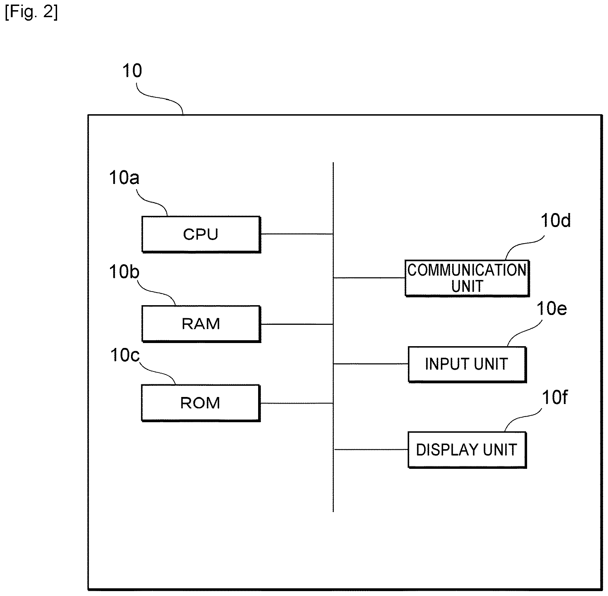

Fig. 2 is a diagram illustrating a physical configuration of the computer 10 according to the present embodiment. The computer 10 includes a CPU (Central Processing Unit) 10a corresponding to a computation unit, a RAM (Random Access Memory) 10b corresponding to a storage unit, a ROM (Read only Memory) 10c corresponding to a storage unit, a communication unit 10d, an input unit 10e, and a display unit 10f. These components are connected to each other via a bus so that data can be transmitted and received. It is to be noted that, in this example, a case will be described in which the computer 10 is composed of one computer, but the computer 10 may be realized by combining a plurality of computers. Further, the configuration illustrated in Fig. 2 is an example, and the computer 10 may include other components, or may not include a part of these components.

The CPU 10a is a control unit that controls execution of a program stored in the RAM 10b or the ROM 10c, computes data, and processes data. The CPU 10a is a computation unit that executes a program (communication program) for controlling communication via the robot. The CPU 10a receives various types of data from the input unit 10e and the communication unit 10d, displays the computation result of the data on the display unit 10f, and stores the data in the RAM 10b.

The RAM 10b is a storage unit capable of rewriting data, and may be composed of, for example, a semiconductor storage device. The RAM 10b may store a program to be executed by the CPU 10a and data such as user information. It is to be noted that they are examples, and other data may be stored, or a part of them may not be stored in the RAM 10b.

The ROM 10c is a storage unit capable of reading data, and may be composed of, for example, a semiconductor storage device. The ROM 10c may store, for example, a communication program or data not to be rewritten.

The communication unit 10d is an interface for connecting the computer 10 to another device. The communication unit 10d may be connected to a communication network such as the Internet.

The input unit 10e receives an input of data from the user, and may include, for example, a keyboard and a touch panel. Further, the input unit 10e may include a microphone for voice input.

**The** display unit 10f visually displays the computation result from the CPU 10a, and may be composed of, for example, an LCD (Liquid Crystal Display). The display unit 10f may display an image captured by a camera 20h of the robot 20.

The communication program may be stored in a storage medium readable by the computer, such as the RAM 10b or the ROM 10c, and provided, or may be provided via a communication network connected by the communication unit 10d. In the computer 10, various operations for controlling the robot 20 are implemented by the CPU 10a executing the communication program. It is to be noted that these physical configurations are examples and do not necessarily have to be independent configurations. For example, the computer 10 may include an LSI (Large-Scale Integration) in which the CPU 10a, the RAM 10b, and the ROM 10c are integrated.

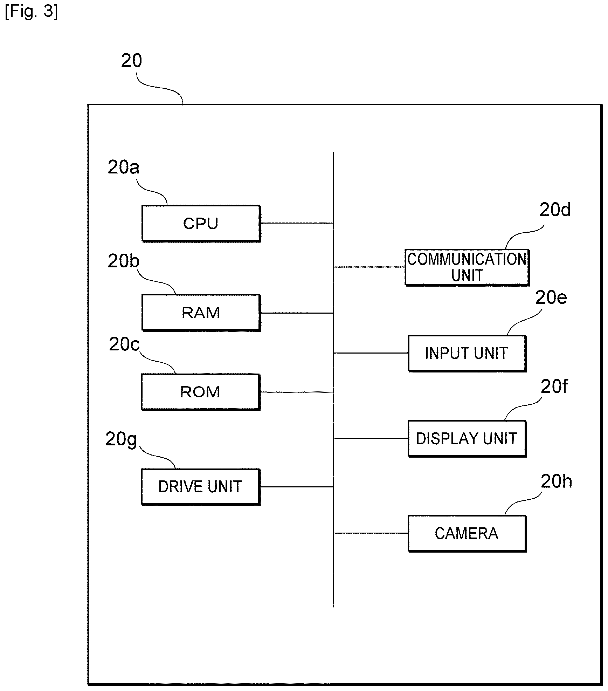

Fig. 3 is a diagram illustrating a physical configuration of the robot 20 according to the present embodiment. The robot 20 includes a CPU 20a corresponding to a computation unit, a RAM 20b corresponding to a storage unit, a ROM 20c corresponding to a storage unit, a communication unit 20d, an input unit 20e, a display unit 20f, a drive unit 20g, and the camera 20h. These components are connected to each other via a bus so that data can be transmitted and received. It is to be noted that, the configuration illustrated in Fig. 3 is an example, and the robot 20 may include other components, or may not include a part of these components.

The CPU 20a is a control unit that controls execution of a program stored in the RAM 20b or the ROM 20c, computes data, and processes data. The CPU 20a is a computation unit that executes a program (communication program) for controlling communication via the robot. The CPU 20a receives various types of data from the input unit 20e and the communication unit 20d, displays the computation result of the data on the display unit 20f, and stores the data in the RAM 20b. Further, the CPU 20a controls the drive unit 20g to control the operation of the robot 20.

The RAM 20b is a storage unit capable of rewriting data, and may be composed of, for example, a semiconductor storage device. The RAM 20b may store a program to be executed by the CPU 20a. It is to be noted that they are examples, and other data may be stored, or a part of them may not be stored in the RAM 20b.

The ROM 20c is a storage unit capable of reading data, and may be composed of, for example, a semiconductor storage device. The ROM 20c may store, for example, a communication program or data not to be rewritten.

The communication unit 20d is an interface for connecting the robot 20 to another device. The communication unit 20d may be connected to a communication network such as the Internet.

**The** input unit 20e receives an input of data from the user, and may include, for example, a touch panel. Further, the input unit 20e may include a microphone for voice input.

The display unit 20f visually displays the computation result from the CPU 20a, and may be composed of, for example, an LCD. In the case where the computer 10 includes a camera, the display unit 20f may display an image captured by the camera of the computer 10.

The drive unit 20g includes an actuator that can be remotely controlled, and also includes a moving part such as a wheel, a manipulator, and the like. For the robot 20 being a mobile type robot, the drive unit 20g includes at least a moving part such as a wheel, but may include a manipulator. For the robot 20 being of wearable type, the drive unit 20g includes at least a manipulator.

The camera 20h includes an image capturing element that captures a still image or a moving image, and transmits the captured still image or moving image to the computer 10 via the communication unit 20d.

The communication program may be stored in a storage medium readable by the computer, such as the RAM 20b or the ROM 20c, and provided, or may be provided via a communication network connected by the communication unit 20d. In the robot 20, various operations for controlling the robot 20 are implemented by the CPU 20a executing the communication program. It is to be noted that these physical configurations are examples and do not necessarily have to be independent configurations. For example, the robot 20 may include an LSI in which the CPU 20a, the RAM 20b, and the ROM 20c are integrated.

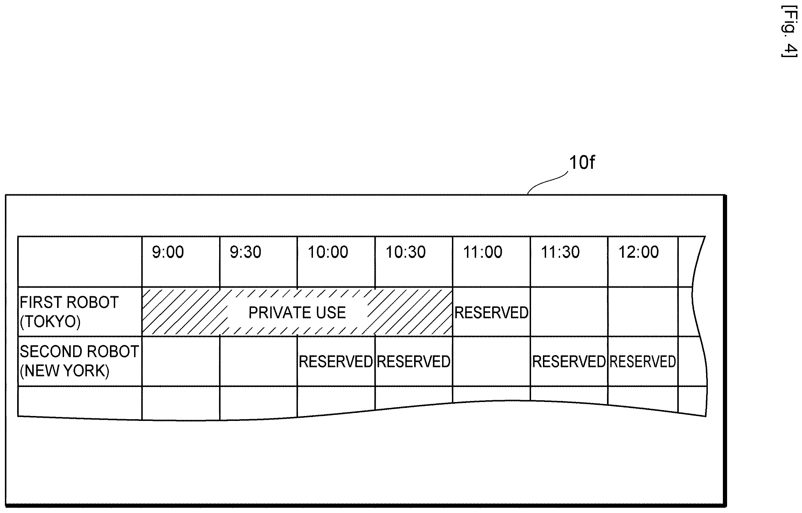

Fig. 4 illustrates an example of a first screen displayed on the computer 10 according to the present embodiment. The example of the first screen is an example of a screen for receiving an advance reservation to use the robot 20. In Fig. 4, the time slot indicated as "private use" is a time slot in which the robot operates in the second mode, and the time slots indicated as "reserved" are time slots in which the robot operates in the first mode and in which a user has already made an advance reservation to use the robot. Further, the blank time slots are time slots in which the robot operates in the first mode and for which no advance reservation is made.

The robot 20 operating in the first mode receives advance reservations from the plurality of computers 10 and operates during the reserved period based on a command from the computer 10 that has made the reservation. As a result, the robot 20 can be lent to an unspecified user in pay by the hour so as to be utilized as an asset. It is to be noted that, when the robot 20 operating in the first mode operates based on a command from the computer 10 that has made an advance reservation, an image captured by the camera of the robot 20 and/or a voice acquired by the microphone of the robot 20 may be shared with other computers that have not made a reservation.

The display unit 10f displays a list of the robots 20 operating in the first mode among the plurality of robots 20. In the case of this example, the first robot located in Tokyo operates in the first mode for time slots after 11:00, and the second robot located in New York operates in the first mode for time slots after 9:00. The input unit 10e receives a selection of one of the robots 20 operating in the first mode and receives an input of a command for the selected robot 20. For example, when an advance reservation is made to use the first robot from 11:00 to 11:30, the input unit 10e receives an input of a command for the first robot during that time slot. In this way, the robots 20 available to an unspecified user can be grasped at a glance, so that the usage of the robots 20 can be promoted and the robots 20 can be more utilized.

Further, the display unit 10f displays a list of the robots 20 operating in the first mode among the plurality of robots 20 and the pre-registered robots 20 operating in the second mode among the plurality of robots 20. In the case of this example, the first robot located in Tokyo is indicated as "private use" for the time slot from 9:00 to 11:00, and operates in the second mode. The input unit 10e receives a selection of either one of the robots 20 operating in the first mode or one of the robots 20 operating in the second mode and receives an input of a command for the selected robot 20. In this way, the robots 20 available to an unspecified user and the pre-registered robots 20 can be grasped at a glance, so that the usage of the robots 20 can be promoted and the robots 20 can be more utilized.

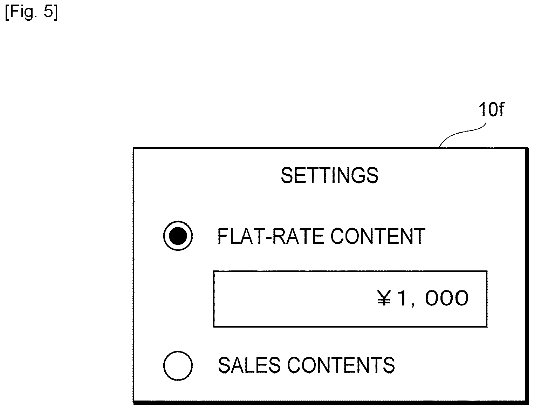

Fig. 5 illustrates an example of a second screen displayed on the computer 10 according to the present embodiment. The example of the second screen is an example of a screen for selecting a content before starting to use the robot 20. In this example, a flat-rate content and sales contents are provided for selection.

The flat-rate content is a content prepared in advance by the owner of the robot 20, and includes, for example, a dialogue with the owner of the robot 20, a tour of the facility where the robot 20 is installed, an activity using the robot 20, and the like. In this example, the price of the flat-rate content is "1,000 yen". The price of the flat-rate content may be different depending on the period of time for which the robot 20 is used.

The sales contents are contents for sale on a content platform, and may include contents created by various users. The content platform is similar to a platform for downloading an application to a smartphone, and is where various users can register and sell contents using the robot 20.

In this way, the robot 20 is openly available in the first mode to make it available to unspecified users, so that the owner can have more opportunities to earn profits and the content creator can have an opportunity to earn profits, which makes it possible to utilize the robots 20 more effectively.

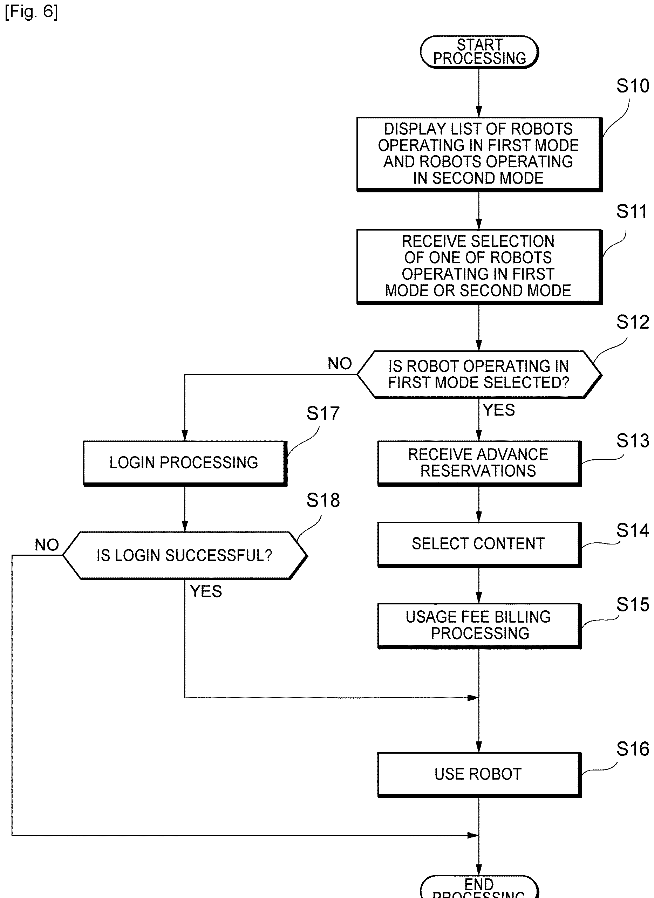

Fig. 6 is a flowchart of processing executed by the computer 10 according to the present embodiment. First, the computer 10 displays a list of the robots 20 operating in the first mode and the robots 20 operating in the second mode among the plurality of robots 20 (S10). Then, the computer 10 receives a selection of one of the robots 20 operating in the first mode or the second mode (S11).

When a robot 20 operating in the first mode is selected (S12: YES), the computer 10 receives an advance reservation for the robot 20 operating in the first mode (S13), and receives a selection of a content (S14). Then, usage fee billing processing for the content is performed (S15). The usage fee billing processing may be, for example, processing of billing the usage fee by using a user's credit card, or processing of displaying a two-dimensional code and performing cashless payment. After that, the computer 10 starts using the robot 20 (S16), and receives a command for the robot 20.

On the other hand, when any of the robots 20 operating in the first mode is not selected (S12: NO), that is, when a robot 20 operating in the second mode is selected, the computer 10 executes login processing (S17). Since the robot 20 operating in the second mode operates based on a command from a pre-registered, specific computer, such authentication processing is needed. If the login is successful (S18: YES), the computer 10 starts using the robot 20 (S16), and receives a command for the robot 20. On the other hand, if the login is not successful (S18: NO), the computer 10 does not permit the use of the robot 20 and ends the processing.

The embodiments described above are for facilitating the understanding of the present invention, and are not intended to limit the present invention. The respective elements included in the embodiments and their arrangement, material, condition, shape, size, and the like are not limited to those illustrated, and can be changed as appropriate. Further, the configurations presented in different embodiments can be partially replaced or combined.

### Reference Signs List

- 10, 11: Computer
- 10a: CPU
- 10b: RAM
- 10c: ROM
- 10d: Communication unit
- 10e: Input unit
- 10f: Display unit
- 20,21,22: Robot
- 20a: CPU
- 20b: RAM
- 20c: ROM
- 20d: Communication unit
- 20e: Input unit
- 20f: Display unit
- 20g: Drive unit
- 20h: Camera
- 100: Communication system

## Claims

1. A communication system comprising
a robot that is not fixed; and
a plurality of computers configured to communicate with the robot, wherein
the robot includes
a camera, and
a mode switching unit that switches between a first mode of operation based on a command from a computer having no special access right among the plurality of computers and a second mode of operation based on a command from a specific computer having a special access right among the plurality of computers, and
the computer includes
an input unit that receives an input of a command for the robot, and
a display unit that displays an image captured by the camera.

2. The communication system according to claim 1, wherein,
when an advance reservation is received from the plurality of computers, the robot operating in the first mode operates during a reserved period based on a command from the computer that has made the advance reservation.

3. The communication system according to claim 1 or 2, wherein,
when a selection of a content is received from the plurality of computers and billing processing for a usage fee for the content is performed, the robot operating in the first mode operates based on a command from a computer that has paid the usage fee.

4. The communication system according to claim 3, wherein
the content is a content prepared in advance by an owner of the robot.

5. The communication system according to claim 3 or 4, wherein
the content is a content for sale on a content platform.

6. The communication system according to any one of claims 1 to 5, wherein
a plurality of robots is provided,
the display unit displays a list of the robots operating in the first mode among the plurality of robots, and
the input unit receives a selection of one of the robots operating in the first mode and receives an input of a command for the selected robot.

7. The communication system according to any one of claims 1 to 6, wherein
a plurality of robots is provided,
the display unit displays a list of the robots operating in the first mode among the plurality of robots and the robots operating in the second mode for which a user has been authenticated among the plurality of robots, and
the input unit receives a selection of either one of the robots operating in the first mode or one of the robots operating in the second mode and receives an input of a command for the selected robot.

8. The communication system according to any one of claims 1 to 7, wherein
switching between the first mode and the second mode is based on a user operation on a switch or an input unit provided in the robot.

9. The communication system according to any one of claims 1 to 8, wherein
switching between the first mode and the second mode is based on a command from the specific computer.

10. A robot of mobile type or wearable type, comprising
a camera and
a remotely operable drive unit, wherein
the robot comprising:
a mode switching unit that switches between a first mode and a second mode;
a reception unit that receives a command from an unspecified computer having no special access right among a plurality of computers when the first mode is set, and receives a command from a specific computer having a special access right among the plurality of computers when the second mode is set;
a control unit that controls the drive unit in response to the received command; and
a transmission unit that transmits an image acquired by the camera to the computer from which the command is input.

11. The robot according to claim 10, wherein,
when an advance reservation is received from the plurality of computers without user authentication, the robot operating in the first mode operates during a reserved period based on a command from the computer that has made the advance reservation.

12. The robot according to claim 10 or 11, wherein,
when a selection of a content is received from the plurality of computers and billing processing for a usage fee for the content is performed, the robot operating in the first mode operates based on a command from a computer that has paid the usage fee.

13. The robot according to claim 12, wherein
the content is a content prepared in advance by an owner of the robot.

14. The robot according to claim 12 or 13, wherein
the content is a content for sale on a content platform.

15. The robot according to any one of claims 10 to 14, wherein
switching between the first mode and the second mode is based on a user operation on a switch or an input unit provided in the robot.

16. The robot according to any one of claims 10 to 15, wherein
switching between the first mode and the second mode is based on a command from the specific computer for which a user has been authenticated.
